# EUROPEAN PATENT SPECIFICATION

(11) **EP 3 240 263 B1**
(45) Date of publication and mention of the grant of the patent: **15.05.2019**
(21) Application number: 15873030.9
(22) Date of filing: 22.12.2015
(51) Int. Cl.: H04L 12/801, G10L 19/16

(54) **VOICE INFORMATION CORRECTION SYSTEM AND VOICE INFORMATION CORRECTION METHOD**
SPRACHINFORMATIONSKORREKTURSYSTEM UND SPRACHINFORMATIONSKORREKTURVERFAHREN
SYSTÈME DE CORRECTION D'INFORMATIONS VOCALES ET PROCÉDÉ DE CORRECTION D'INFORMATIONS VOCALES

(30) Priority: 22.12.2014 JP 2014258603
(43) Date of publication of application: 01.11.2017
(73) Proprietor: Aisin AW Co., Ltd., Anjo-shi, Aichi 444-1192 (JP); TOYOTA JIDOSHA KABUSHIKI KAISHA, Toyota-shi, Aichi, 471-8571 (JP)
(72) Inventor: ISHIDA, Hirokazu, Anjo-shi Aichi 444-1192 (JP); HAYASHI, Kazushige, Toyota-shi Aichi 471-8571 (JP)
(74) Representative: Intès, Didier Gérard André
(86) International application number: PCT/JP2015/085743
(87) International publication number: WO 2016/104462

(56) References cited:
- EP-A1- 1 826 959
- JP-A- 2007 235 221
- JP-A- 2009 543 140
- JP-A- 2014 150 413
- JP-A- 2014 150 413
- US-A1- 2007 211 704

## Description

### TECHNICAL FIELD

The present invention relates to audio information correction systems, audio information correction methods, and audio information correction programs.

### BACKGROUND ART

Conventionally, there is a demand for systems that output audio information (e.g., music information) recorded on a mobile terminal such as a mobile phone from a speaker of an on-board device so that more than one occupant in a vehicle can listen to the audio information. In response to this demand, a system that allows an on-board device to play back audio information is proposed in which a mobile terminal and the on-board device are connected by near-field communication (such as Bluetooth (registered trademark)), the mobile terminal encodes and transmits audio information, the on-board device receives and decodes the encoded audio information, stores the decoded audio information in a buffer, plays back the audio information stored in the buffer, and discards the audio information that has been played back from the buffer (see, e.g., Patent Document 1).

### Related Art Documents

### Patent Documents

Patent Document 1: Japanese Patent Application Publication No. 2013-236346 (JP 2013-236346 A)

US 2007/0211704 discloses a method and apparatus for dynamically adjusting the playout delay of audio signals.

### SUMMARY OF THE INVENTION

### Problem to be Solved by the Invention

In Patent Document 1, the encoding processing and decoding processing are performed by different devices, which may produce a short time lag between the processing of these devices. Accordingly, when music is played back, the rate at which the audio information is discarded from the buffer may not keep up with the rate at which the audio information is stored in the buffer. In this case, the total amount of audio information stored in the buffer may reach the overall capacity of the buffer, so that the buffer cannot store any more audio information (hereinafter referred to as buffer overflow). Alternatively, the rate at which the audio information is stored in the buffer may not keep up with the rate at which the audio information is discarded from the buffer. This may result in the state where the buffer has no audio information stored therein (hereinafter referred to as buffer underflow). If such buffer overflow or buffer underflow occurs, continuity of the audio information that is stored in the buffer cannot be maintained, which may hinder continuous playback of the audio information. Accordingly, systems are desired which can prevent overflow or underflow of storage means such as a buffer and maintain continuity of audio information.

The present invention was developed in view of the above circumstances and it is an object of the present invention to provide an audio information correction system, an audio information correction method, and an audio information correction program which can prevent overflow or underflow of storage means such as a buffer and maintain continuity of audio information.

### Means for Solving the Problem

In order to solve the above problems and achieve the above object, an audio information correction system according to claim 1 is provided.

An audio information correction method according to claim 6 is provided.

### Effects of the Invention

In the audio information correction system and the audio information correction method according to the present invention, audio information is corrected by deleting a silent part from storage means or adding another silent part continuously before or after the silent part. Accordingly, overflow or underflow of storage means for storing audio information can be prevented, and continuity of the audio information can be maintained.

Moreover, since a part to be deleted from or added to the audio information is limited to a silent part, discontinuity of an audio part can be prevented and a silent part can be prevented from being embedded in an audio part, whereby degradation in sound quality can be prevented.

### BRIEF DESCRIPTION OF THE DRAWINGS

FIG. 1 is a block diagram showing an audio information correction system according to an embodiment of the present invention.
FIG. 2 is a flowchart of decoding processing.
FIG. 3 is a first flowchart of playback control processing.
FIG. 4 is a second flowchart of the playback control processing.
FIG. 5 is a third flowchart of the playback control processing.
FIG. 6 is a graph showing change in volume of audio information stored in a buffer.

### MODES FOR CARRYING OUT THE INVENTION

An embodiment of an audio information correction system and an audio information correction method according to the present invention will be described in detail below with reference to the accompanying drawings. The embodiment is not intended to limit the present invention.

### [Basic Concept of Embodiment]

First, the basic concept of the embodiment will be described. The present embodiment generally relates to an audio information correction system that corrects audio information transmitted from transmission means. This audio information correction system is applicable to any devices. Although the present embodiment is described with respect to the case where the audio information correction system is applied to an on-board device, this audio information correction system is also applicable to any devices including, e.g., a smartphone and a mobile navigation system. The "transmission means" is applicable to any devices that can transmit audio information. Although the present embodiment is described with respect to the case where the transmission means is a mobile terminal such as a smartphone, the transmission means may be, e.g., a device exclusively for music playback etc.

### [Specific Details of Embodiment]

Next, specific details of the embodiment will be described.

### (Configuration)

The present embodiment will be described with respect to the case where an audio information correction program is installed in an on-board navigation system (hereinafter referred to as the on-board device) so that the on-board device functions as an audio information correction system. The audio information correction program may alternatively be installed in any devices including a smartphone and a mobile navigation system as described above so as to configure an audio information correction system. Since the function as the on-board device in the audio information correction system can be implemented by a configuration similar to that of known on-board devices, description thereof will be omitted. In particular, a configuration that implements a function to correct audio information will be described below. In the following description, a vehicle equipped with this audio information correction system (vehicle that is occupied by a user who operates the on-board device) is simply referred to as the "vehicle." The "vehicle" includes a four-wheeled motor vehicle, a two-wheeled motor vehicle, and a bicycle. The following description is for the case where the vehicle is a four-wheeled motor vehicle.

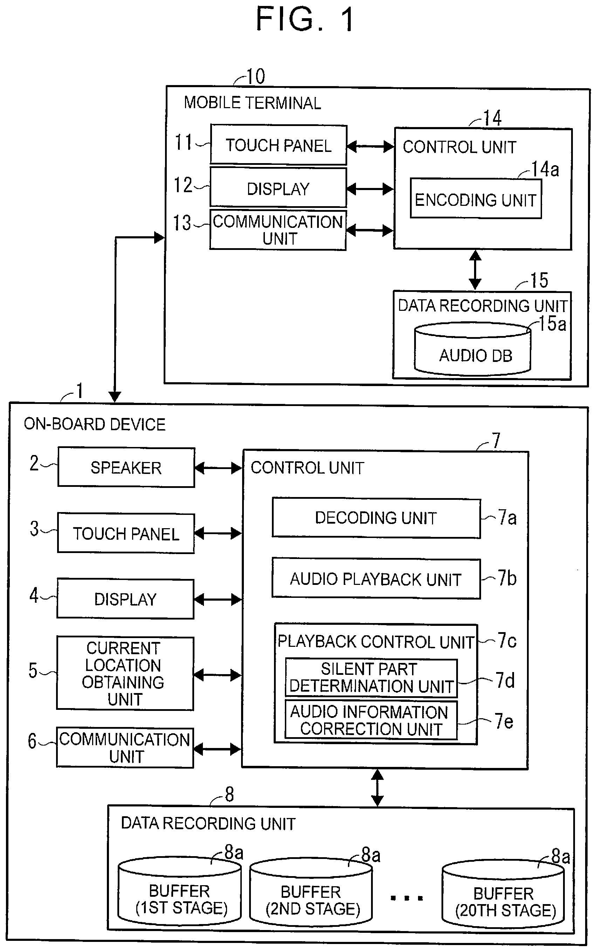

FIG. 1 is a block diagram showing the audio information correction system according to the present embodiment. The configurations of an on-board device 1 and a mobile terminal 10 that can communicate with the on-board device 1 will be described below.

### (Configuration - On-Board Device)

First, the configuration of the on-board device 1 will be described. As shown in FIG. 1, the on-board device 1 generally includes a speaker 2, a touch panel 3, a display 4, a current location obtaining unit 5, a communication unit 6, a control unit 7, and a data recording unit 8.

### (Configuration - On-Board Device - Speaker)

The speaker 2 is audio output means for outputting information as sound based on control of the control unit 7, and in particular, is audio playback means for playing back audio information stored in the data recording unit 8. The sound that is output from the speaker 2 can be any specific form, and the speaker 2 can output synthetic sound generated as needed or sound recorded in advance.

### (Configuration - On-Board Device - Touch Panel)

The touch panel 3 receives various manual inputs from the user when pressed with his/her finger etc. The touch panel 3 is transparent or translucent and is placed on the front surface of the display 4 so as to lie on top of the display surface of the display 4. For example, this touch panel 3 may be a known touch panel including operation position detection means such as a resistive touch panel or a capacitive touch panel.

### (Configuration - On-Board Device - Display)

The display 4 is display means in the on-board device 1 for displaying various images, and in particular, is display means for displaying a map based on map information stored in a known map database (not shown) in the data recording unit 8. This display 4 may have any specific configuration, and may be a flat panel display such as a known liquid crystal display or a known organic EL display.

### (Configuration - On-Board Device - Current Location Obtaining Unit)

The current location obtaining unit 5 is current location obtaining means for obtaining a current location of the vehicle. For example, the current location obtaining unit 5 obtains by a known method a current location (coordinates), cardinal direction, etc. of the on-board device 1 detected by at least one of a GPS, a geomagnetic sensor, a distance sensor, and a gyro sensor (none of which are shown).

### (Configuration - On-Board Device - Communication Unit)

The communication unit 6 is communication means for communicating with a center device (not shown) and the mobile terminal 10 via a network. The communication means may be of any specific kind or may have any specific configuration. For example, the communication means may be known mobile wireless communication means or known wireless communication means for VICS (registered trademark) systems using FM multiplex broadcasting and beacons. In the present embodiment, the communication unit 6 is known Bluetooth communication means for communicating with the mobile terminal 10 and for receiving continuous audio information transmitted from the mobile terminal 10 via communication.

### (Configuration - On-Board Device - Control Unit)

The control unit 7 is control means for controlling the on-board device 1, and specifically, is a computer including a CPU, various programs that are interpreted and executed on the CPU (including basic control programs such as OS and application programs that are started on the OS to implement specific functions), and an internal memory, such as a RAM, which stores the programs and various data. In particular, the audio information correction program according to the present embodiment substantially forms each part of the control unit 7 when installed in the on-board device 1 via any storage medium or network.

The control unit 7 functionally and conceptually includes a decoding unit 7a, an audio playback unit 7b, and a playback control unit 7c. The decoding unit 7a is decoding means for decoding audio information received by the communication unit 6 of the on-board device 1. The audio playback unit 7b is playback means for starting playback of audio information stored in a buffer 8a, described later, of the data recording unit 8. The playback control unit 7c is playback control means for performing control relating to playback of audio information, and includes a silent part determination unit 7d and an audio information correction unit 7e. The silent part determination unit 7d is silent part determination means for determining if a silent part that lasts for the length of reference time is present in audio information stored in the buffer 8a, described later, of the data recording unit 8. The "silent part" refers to a silent (zero volume level) part in audio parts contained in audio information. The silent part is not limited to complete silence, and may include a part whose volume is so low that the part cannot be perceived by human ear. The "reference time" is a very short time that is short enough for a person not to feel strange even if an audio part having the length of the reference time is deleted from or added to audio information. For example, the reference time is 10 milliseconds in the present embodiment. The audio information correction unit 7e is audio information correction means for, if the silent part determination unit 7d determines that a silent part is present, correcting audio information by deleting the silent part from the buffer 8a or by adding another silent part continuously before or after the silent part and storing the resultant audio information in the buffer 8a. Specific processing that is performed by each unit of the control unit 7 will be described later.

### (Configuration - On-Board Device - Data Recording Unit)

The data recording unit 8 is recording means for recording programs and various data which are required for operation of the on-board device 1, and for example, is formed by using a hard disk (not shown) serving as an external recording device. However, any other recording media including a magnetic recording medium such as a magnetic disk and an optical recording medium such as a DVD or a Blu-ray disc may be used instead of the hard disk or in combination with the hard disk. The data recording unit 8 includes the buffer 8a.

The buffer 8a is storage means for storing continuous audio information transmitted from the mobile terminal 10. Specifically, when audio information is transmitted from the mobile terminal 10, the audio information is continuously stored and accumulated as a continuous signal in the buffer 8a. The signal thus accumulated in the buffer 8a is continuously played back from the beginning of the signal by the audio playback unit 7b, and the signal used for playback is continuously deleted. Accumulation, playback, and deletion of audio information are thus substantially simultaneously performed and repeated in the buffer 8a. Since the processing for accumulating audio information in the buffer 8a and deleting the audio information that has been played back is known in the art, detailed description thereof will be omitted.

The buffer 8a is conceptually divided into a plurality of stages (in the present embodiment, a total of 20 stages from the 1st stage to the 20th stage sequentially from the beginning of the signal), and each buffer 8a is a division that stores the same volume (e.g., 6 Kbytes) of information. That is, the entire buffer 8a can store up to 120 Kbytes (6 Kbytes × 20 stages) of information.

### (Configuration - Mobile Terminal)

The configuration of the mobile terminal 10 will be described below. The mobile terminal 10 is transmission means for transmitting audio information to the on-board device 1. As shown in FIG. 1, the mobile terminal 10 generally includes a touch panel 11, a display 12, a communication unit 13, a control unit 14, and a data recording unit 15.

### (Configuration - Mobile Terminal - Touch Panel)

The touch panel 11 receives various manual inputs from the user when pressed with his/her finger etc. The touch panel 11 is transparent or translucent and is placed on the front surface of the display 12 so as to lie on top of the display surface of the display 12. For example, this touch panel 11 may be a known touch panel including operation position detection means such as a resistive touch panel or a capacitive touch panel.

### (Configuration - Mobile Terminal - Display)

The display 12 is display means in the mobile terminal 10 for displaying various images, and in particular, is display means for displaying a list of audio information based on audio information stored in an audio DB 15a, described later, in the data recording unit 15 of the mobile terminal 10. This display 12 may have any specific configuration, and may be a flat panel display such as a known liquid crystal display or a known organic EL display.

### (Configuration - Mobile Terminal - Communication Unit)

The communication unit 13 is communication means for communicating with the on-board device 1 via a network. The communication means may be of any specific kind or may have any specific configuration. For example, the communication means may be known mobile wireless communication means or known wireless communication means for VICS systems using FM multiplex broadcasting and beacons. In the present embodiment, the communication unit 13 is known Bluetooth communication means for communicating with at least the on-board device 1.

### (Configuration - Mobile Terminal - Control Unit)

The control unit 14 is control means for controlling the mobile terminal 10, and specifically, is a computer including a CPU, various programs that are interpreted and executed on the CPU (including basic control programs such as OS and application programs that are started on the OS to implement specific functions), and an internal memory, such as a RAM, which stores the programs and various data.

The control unit 14 functionally and conceptually includes an encoding unit 14a. The encoding unit 14a is encoding means for encoding audio information stored in the audio DB 15a, described later, in the data recording unit 15. Specific processing that is performed by the control unit 14 will be described later.

### (Configuration - Mobile Terminal - Data Recording Unit)

The data recording unit 15 is recording means for recording programs and various data which are required for operation of the mobile terminal 10, and for example, is formed by using a hard disk (not shown) serving as an external recording device. However, any other recording media including a magnetic recording medium such as a magnetic disk and an optical recording medium such as a DVD or a Blu-ray disc may be used instead of the hard disk or in combination with the hard disk. The data recording unit 15 includes the audio database 15a (hereinafter the database is referred to as the "DB").

The audio DB 15a is audio information storage means for storing audio information. The audio DB 15a has audio information (e.g., music etc.) imported therein via a desired recording medium or network and stored as a list of audio information. The audio information stored in the audio DB 15a can be listened to from a speaker (not shown) of the mobile terminal 10 when played back by operation of the touch panel 11 of the mobile terminal 10.

### (Processing)

Processing that is performed by the audio information correction system configured as described above will be described below.

### (Processing - Decoding Processing)

First, decoding processing will be described. The decoding processing is generally processing for decoding audio information transmitted from the mobile terminal 10 and storing the decoded audio information in the buffer 8a. This decoding processing can be performed at a desired timing. The present embodiment is described with respect to an example in which the decoding processing is automatically performed when the power of the on-board device 1 is turned on.

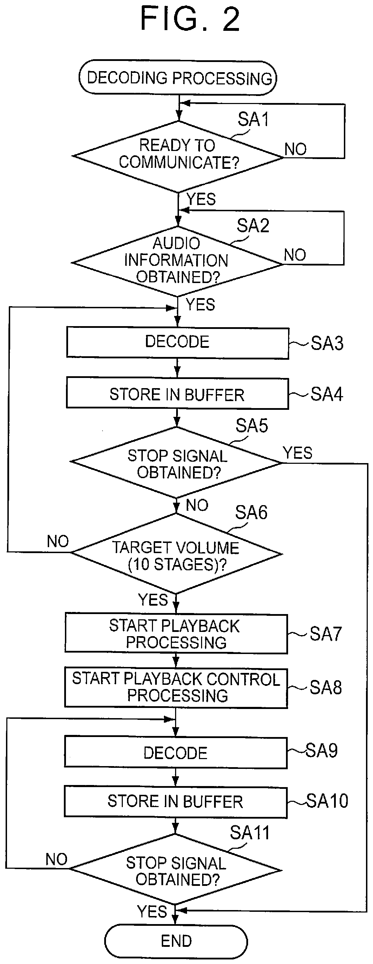

FIG. 2 is a flowchart of the decoding processing. First, in SA1, the control unit 7 of the on-board device 1 determines if the on-board device 1 and the mobile terminal 10 are ready to communicate with each other. Whether the on-board device 1 and the mobile terminal 10 are ready to communicate with each other or not can be determined by any specific method. For example, whether the on-board device 1 and the mobile terminal 10 are ready to communicate with each other or not may be determined based on whether a Bluetooth connection has been established between the communication unit 6 of the on-board device 1 and the communication unit 13 of the mobile terminal 10 or not.

Specifically, when the on-board device 1 is on, the on-board device 1 is broadcasting a search signal via Bluetooth. When the user holding the mobile terminal 10 gets in a vehicle, the user's mobile terminal 10 is present within a near-field communication range of the on-board device 1 (generally within 10 m from the on-board device 1). The user's mobile terminal 10 therefore receives the search signal from the on-board device 1 and transmits a connection establishment signal for establishing a connection of near-field communication to the on-board device 1.

In response to the connection establishment signal, the on-board device 1 transmits a PIN code request signal to the mobile terminal 10. In response to the PIN code request signal, the mobile terminal 10 displays a PIN code entry screen on the display 12 of the mobile terminal 10 to prompt the user to enter a PIN code. When the user enters a PIN code, the mobile terminal 10 transmits a PIN code signal. When the on-board device 1 receives the PIN code, it compares the PIN code with a PIN code recorded in advance in the on-board device 1. If these PIN codes match, the on-board device 1 establishes a Bluetooth connection with the mobile terminal 10. Once a Bluetooth connection is thus established between the on-board device 1 and the mobile terminal, such entry of the PIN code may be omitted for the second and subsequent Bluetooth connections, and the on-board device 1 may establish a Bluetooth connection with the mobile terminal 10 when the mobile terminal 10 is located within the near-field communication range of the on-board device 1. The control unit 7 thus determines if a Bluetooth connection has been established between the communication unit 13 of the mobile terminal 10 and the communication unit 6 of the on-board device 1.

If the on-board device 1 and the mobile terminal 10 are not ready to communicate with each other (SA1, No), the control unit 7 of the on-board device 1 repeats SA1 and waits until the on-board device 1 and the mobile terminal 10 become ready to communicate with each other. If the on-board device 1 and the mobile terminal 10 are ready to communicate with each other (SA1, Yes), the routine proceeds to SA2.

In SA2, the control unit 7 of the on-board device 1 determines if audio information has been obtained from the mobile terminal 10. For example, when the user operates the touch panel 11 of the mobile terminal 10 and presses an audio playback icon displayed on the display 12, the encoding unit 14a of the mobile terminal 10 encodes audio information stored in the audio DB 15a, and the encoded audio information is transmitted to the on-board device 1 via the communication unit 13 of the mobile terminal 10. If the encoded audio information has been received via the communication unit 6 of the on-board device 1, the control unit 7 of the on-board device 1 determines that audio information has been obtained.

If no audio information has been obtained (SA2, No), the control unit 7 of the on-board device 1 repeats SA2 and waits until audio information is obtained. If audio information has been obtained (SA2, Yes), the routine proceeds to SA3.

In SA3, the decoding unit 7a decodes the audio information obtained from the mobile terminal 10. Since a known decoding method can be used, detailed description of a specific decoding method will be omitted.

Thereafter, in SA4, the decoding unit 7a stores the audio information decoded in SA3 in the buffer 8a. Storage of the audio information in the buffer 8a and playback of the audio information which is started in SA7 described later are carried out by first in, first out (FIFO). In particular, in the present embodiment, the buffer 8a is divided into a plurality of stages (in the present embodiment, a total of 20 stages from the 1st stage to the 20th stage sequentially from the beginning of the signal) as described above, and stores the audio information sequentially from the first division (1st stage) to the last division (20th stage).

Subsequently, in SA5, the control unit 7 of the on-board device 1 determines if a stop signal requesting stop of audio playback has been obtained from the mobile terminal 10. Specifically, when the user operates the touch panel 11 of the mobile terminal 10 and presses a playback stop icon displayed on the display 12, the control unit 14 of the mobile terminal 10 first generates a stop signal, and the stop signal thus generated is transmitted to the on-board device 1 via the communication unit 13 of the mobile terminal 10. If this stop signal has been received via the communication unit 6 of the on-board device 1, the control unit 7 of the on-board device 1 determines that a stop signal has been obtained.

If the stop signal has been obtained (SA5, Yes), which means that the user no longer wants to play back the audio information, the control unit 7 of the on-board device 1 terminates the decoding processing. If no stop signal has been obtained (SA5, No), the routine proceeds to SA6.

In SA6, the playback control unit 7c determines if a target volume of audio information has been stored in the buffer 8a. The "target volume" is the volume that is referred to when determining if correction processing for correcting audio information stored in the buffer 8a should be terminated (determinations in SB4, SB9, SB14, SB19 described later), and in the present embodiment, is a reference volume for starting playback of audio information. The "target volume" can be set by any specific method, and it is preferable that the target volume be set to a value that is farthest from both underflow and overflow of the buffer 8a, and more specifically, to half the overall capacity of the buffer 8a. Accordingly, in the present embodiment, the target volume is equal to half the overall capacity of the buffer 8a, namely half the total capacity of 20 stages, and is therefore equal to the total capacity of 10 stages.

If the playback control unit 7c determines that audio information corresponding to the total capacity of 10 stages has not been stored yet (SA6, No), the processing for decoding the audio information in SA3, storing the decoded audio information in the buffer 8a in SA4, determining if a stop signal has been obtained in SA5, and determining if audio information corresponding to the total capacity of 10 stages has been stored in SA6 is repeated until audio information corresponding to the total capacity of 10 stages is stored in the buffer 8a. If the playback control unit 7c determines that audio information corresponding to the total capacity of 10 stages has been stored in the buffer 8a (SA6, Yes), the routine proceeds to SA7.

In SA7, the audio playback unit 7b starts playback processing. The playback processing will be specifically described later. As described above, in the present embodiment, the playback processing for playing back audio is started after audio information corresponding to the total capacity of 10 stages is stored in the buffer 8a. Accordingly, the playback processing can be performed in the state where audio information corresponding to half the overall capacity of the buffer 8a has been stored, namely in the state farthest from both underflow and overflow of the buffer 8a. This can reduce the possibility that underflow and overflow of the buffer 8a will occur.

Next, in SA8, the playback control unit 7c starts playback control processing. The playback control processing will be specifically described later.

Thereafter, in SA9, the decoding unit 7a decodes the audio information obtained from the mobile terminal 10. Since a specific decoding method is known in the art like SA3, description thereof will be omitted.

Subsequently, in SA10, the decoding unit 7a stores the audio information decoded in SA9 in the buffer 8a. Since a specific method for storing the audio information is known in the art like SA4, description thereof will be omitted.

Thereafter, in SA11, the control unit 7 of the on-board device 1 determines if a stop signal requesting stop of audio playback has been obtained from the mobile terminal 10. Since a specific method of this determination is similar to that of SA5, description thereof will be omitted. If the control unit 7 of the on-board device 1 determines that no stop signal has been obtained (SA11, No), which means that the user still wants to play back the audio information, the control unit 7 of the on-board device 1 repeats the processing of decoding the audio information in SA9, storing the decoded audio information in the buffer 8a in SA10, and determining if a stop signal has been obtained in SA11. If the stop signal has been obtained (SA11, Yes), which means that the user no longer wants to play back the audio information, the control unit 7 of the on-board device 1 terminates the decoding processing.

### (Playback Processing)

The playback processing that is started by the audio playback unit 7b in SA7 will be described below. The playback processing is processing for playing back the audio information stored in the buffer 8a in SA4 and SA10 of the decoding processing. Specifically, the audio playback unit 7b plays back the audio information stored in the buffer 8a from the speaker 2 and discards (erases) the audio information that has been played back. The audio information continuously stored in the buffer 8a is thus played back by repeating playback and discard of the audio information. Since such playback processing can be performed by a known method, detailed description thereof will be omitted.

### (Playback Control Processing)

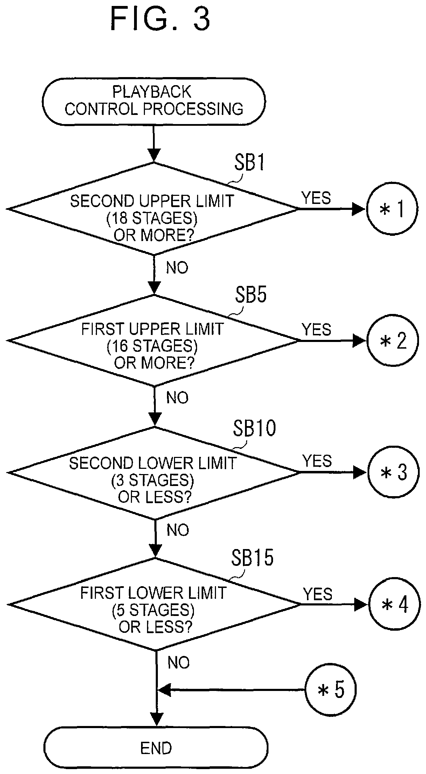

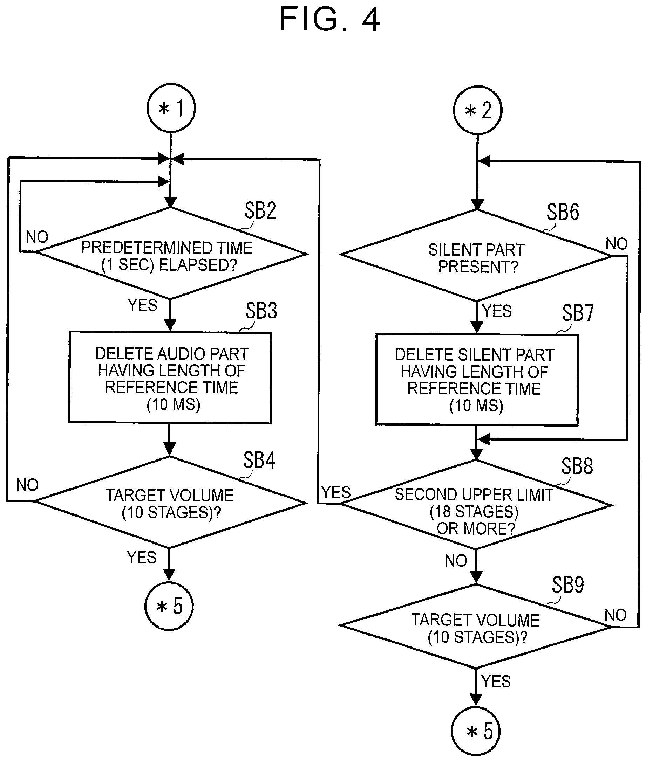

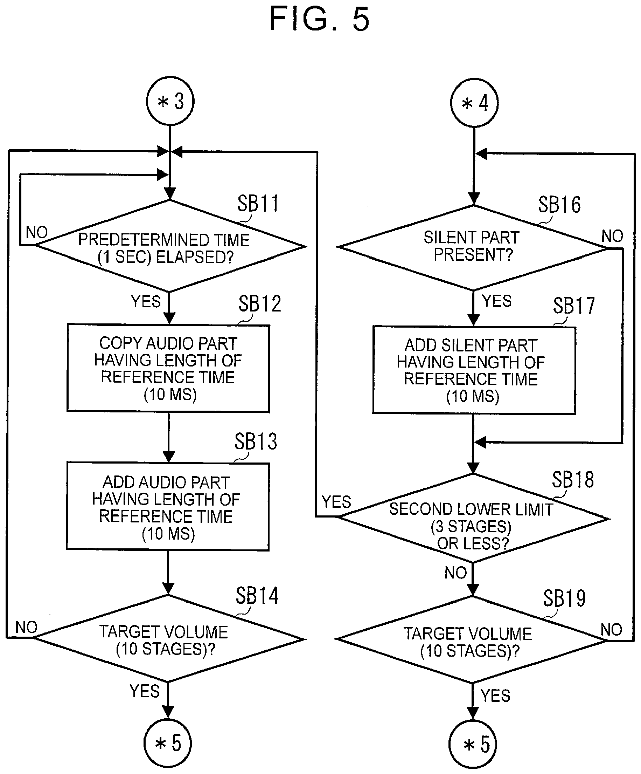

The playback control processing that is started by the playback control unit 7c in SA8 will be described below. FIG. 3 is a first flowchart of the playback control processing, FIG. 4 is a second flowchart of the playback control processing, and FIG. 5 is a third flowchart of the playback control processing. The playback control processing is generally processing for reducing the possibility that buffer overflow or buffer underflow will occur in the buffer 8a when playing back the audio information. The audio information correction system performs the playback control processing to correct the audio information so that the volume of audio information stored in the buffer 8a becomes closer to the target volume. After the playback control processing is started in SA8, the playback control processing is repeated until it is determined in SA11 that a stop signal has been obtained (SA11, Yes).

First, in SB1 of FIG. 3, the playback control unit 7c refers to the buffer 8a and determines if the volume of audio information stored in the buffer 8a is equal to or larger than a second upper limit. The second upper limit is a value that is used as an index for determining that there is a very strong possibility that buffer overflow will occur, and is a value that is set so as to satisfy the condition that the second upper limit is larger than a first upper limit (total capacity of 16 stages) described later. In the present embodiment, the second upper limit is set to the total capacity of 18 stages. However, the present invention is not limited to this, and the second upper limit may be set to any value that satisfies the above condition (e.g., total capacity of 17 to 19 stages). If the playback control unit 7c determines that the volume of audio information stored in the buffer 8a is neither equal to nor larger than the second upper limit (total capacity of 18 stages) (SB1, No), the playback control unit 7c determines that there isn't a very strong possibility that buffer overflow will occur, and the routine proceeds to SB5. If the playback control unit 7c determines that the volume of audio information stored in the buffer 8a is equal to or larger than the second upper limit (total capacity of 18 stages) (SB1, Yes), the playback control unit 7c determines that there is a very strong possibility that buffer overflow will occur, and the routine proceeds to SB2 of FIG. 4.

In SB2, the playback control unit 7c determines if a predetermined time has elapsed since the start of measurement of time. Specifically, the on-board device 1 includes time measurement means, not shown, such as a timer. In SB2, the playback control unit 7c first starts measuring time with this time measurement means and waits until the predetermined time has elapsed (SB2, No). If the predetermined time has elapsed (SB2, Yes), the routine proceeds to SB3. The "predetermined time" is a time period for deciding time intervals at which an audio part is repeatedly deleted in SB3. The predetermined time may be set to a desired time. However, if the predetermined time is too short, an audio part of 10 milliseconds is frequently deleted in SB3 and a person listening to the audio may feel strange. If the predetermined time is too long, it impairs the function to delete an audio part of 10 milliseconds in SB3 to prevent buffer overflow. It is therefore preferable to set the predetermined time so as to balance therebetween. In the present embodiment, the predetermined time is set to 1 second.

Thereafter, in SB3, the audio information correction unit 7e deletes an audio part having the length of the reference time in the audio information stored in the buffer 8a. The "length of the reference time" may be set to any very short time that is short enough for the user not to feel strange when listening to the audio information. Although the length of the reference time is 10 milliseconds in the present embodiment, the present invention is not limited to this. The audio part to be deleted may be any part of the stored audio information. In the present embodiment, the beginning part of the audio information is deleted. However, for example, the end part of the audio information or an intermediate part of the audio information may be deleted.

Subsequently, in SB4, the playback control unit 7c refers to the buffer 8a and determines if the volume of audio information stored in the buffer 8a has been reduced to the target volume. In the present embodiment, the target volume is set to the total capacity of 10 stages as described above. If the playback control unit 7c determines that the volume of audio information stored in the buffer 8a has not been reduced to the target volume (total capacity of 10 stages) (SB4, No), namely if the playback control unit 7c determines that the volume of audio information stored in the buffer 8a corresponds to the total capacity of 11 to 20 stages, the playback control unit 7c determines that there still is a very strong possibility that buffer overflow will occur, and the routine returns to SB2. Subsequently, SB2 to SB4 are similarly repeated. An audio part having the length of the reference time (10 milliseconds) is thus deleted at intervals of the predetermined time (1 second) until the volume of audio information stored in the buffer 8a reaches the target volume (total capacity of 10 stages). This can avoid the very strong possibility that buffer overflow will occur. If the playback control unit 7c determines that the volume of audio information stored in the buffer 8a has been reduced to the target volume (total capacity of 10 stages) (SB4, Yes), the playback control unit 7c determines that the very strong possibility that buffer overflow will occur has been able to be avoided by deleting an audio part in SB3. The routine thus returns to FIG. 3, and the playback control unit 7c terminates the playback control processing (although "END" is shown for convenience of illustration in FIG. 3, the playback control processing is repeated until it is determined in SA11 that a stop signal has been obtained (SA11, Yes), as described above. The same applies to the following description). Deletion is thus automatically ended when the volume of audio information stored in the buffer 8a reaches the target volume (total capacity of 10 stages). This can prevent unnecessary deletion. Since the target volume is half (total capacity of 10 stages) the overall capacity of the buffer 8a (total capacity of 20 stages), the target volume can be set to an intermediate value at which overflow and underflow of the buffer 8a are least likely to occur. Accordingly, overflow and underflow of the buffer 8a can be prevented and continuity of audio information can be maintained.

In SB5 of FIG. 3, the playback control unit 7c refers to the buffer 8a and determines if the volume of audio information stored in the buffer 8a is equal to or larger than the first upper limit. The first upper limit is a value that is used as an index for determining that there is a fairly strong possibility that buffer overflow will occur, and is a value that is set so as to satisfy the condition that the first upper limit is larger than the target volume (total capacity of 10 stages). In the present embodiment, the first upper limit is set to the total capacity of 16 stages. However, the present invention is not limited to this, and the first upper limit may be set to any value that satisfies the above condition (e.g., total capacity of 11 to 17 stages). If the playback control unit 7c determines that the volume of audio information stored in the buffer 8a is neither equal to nor larger than the first upper limit (total capacity of 16 stages) (SB5, No), the playback control unit 7c determines that there isn't a fairly strong possibility that buffer overflow will occur, and the routine proceeds to SB10. If the playback control unit 7c determines that the volume of audio information stored in the buffer 8a is equal to or larger than the first upper limit (total capacity of 16 stages) (SB5, Yes), the playback control unit 7c determines that there is a fairly strong possibility that buffer overflow will occur, and the routine proceeds to SB6 of FIG. 4.

In SB6, the silent part determination unit 7d refers to the buffer 8a and determines if a silent part having the length of the reference time (10 milliseconds) is present in the audio information stored in the buffer 8a. Since a specific method of this determination is known in the art, detailed description thereof will be omitted. If the silent part determination unit 7d determines that a silent part is present (SB6, Yes), the routine proceeds to SB7. If the silent part determination unit 7d determines that no silent part is present (SB6, No), the routine proceeds to SB8.

In SB7, the audio information correction unit 7e deletes the silent part having the length of the reference time (10 milliseconds) from the buffer 8a. Since an audio part to be deleted is thus limited to a silent part, the silent part can be reduced. Degradation in sound quality can thus be restrained. Moreover, overflow of the buffer 8a can be prevented, and continuity of audio information can be maintained. That is, since a part of silent parts is deleted, a part of audio information is undesirably skipped anyway. However, skipping of sound can be made less likely to be perceived as compared to the case where an audio part with sound is deleted.

Subsequently, in SB8, the playback control unit 7c refers to the buffer 8a and determines if the volume of audio information stored in the buffer 8a is equal to or larger than the second upper limit (total capacity of 18 stages). If the playback control unit 7c determines that the volume of audio information stored in the buffer 8a is equal to or larger than the second upper limit (total capacity of 18 stages) (SB8, Yes), the playback control unit 7c determines that there is a very strong possibility that buffer overflow will occur, and the routine proceeds to SB2. If the volume of audio information has reached the second upper limit (total capacity of 18 stages) but no silent part is present in the audio information, the volume of audio information cannot be reduced by the processing of SB6 and SB7, and the audio information may become equal to or larger than the second upper limit (total capacity of 18 stages). In such a case, the routine proceeds to the processing (SB2, SB3) that is performed when there is a very strong possibility that buffer overflow will occur. An audio part is thus deleted regardless of whether a silent part is present or not, whereby buffer overflow is prevented. If the playback control unit 7c determines that the volume of audio information stored in the buffer 8a is neither equal to nor larger than the second upper limit (total capacity of 18 stages) (SB8, No), the playback control unit 7c determines that there isn't a very strong possibility that buffer overflow will occur, and the routine proceeds to SB9.

In SB9, the playback control unit 7c refers to the buffer 8a and determines if the volume of audio information stored in the buffer 8a has been reduced to the target volume (total capacity of 10 stages). If the playback control unit 7c determines that the volume of audio information stored in the buffer 8a has not been reduced to the target volume (total capacity of 10 stages) (SB9, No), namely if the playback control unit 7c determines that the volume of audio information stored in the buffer 8a is smaller than the second upper limit (total capacity of 18 stages) but is larger than the target volume (total capacity of 10 stages), the playback control unit 7c determines that there still is a fairly strong possibility that buffer overflow will occur, and the routine returns to SB6. Subsequently, SB6 to SB9 are similarly repeated. Silent parts can thus be deleted until the volume of audio information stored in the buffer 8a reaches the target volume (total capacity of 10 stages). This can avoid the fairly strong possibility that buffer overflow will occur. If the playback control unit 7c determines that the volume of audio information stored in the buffer 8a has been reduced to the target volume (total capacity of 10 stages) (SB9, Yes), the playback control unit 7c determines that the fairly strong possibility that buffer overflow will occur has been able to be avoided by deleting a silent part having the length of the reference time (10 milliseconds) in SB7. The routine thus returns to FIG. 3, and the playback control unit 7c terminates the playback control processing.

In SB10 of FIG. 3, the playback control unit 7c refers to the buffer 8a and determines if the volume of audio information stored in the buffer 8a is equal to or smaller than a second lower limit. The second lower limit is a value that is used as an index for determining that there is a very strong possibility that buffer underflow will occur, and is a value that is set so as to satisfy the condition that the second lower limit is smaller a first lower limit (total capacity of 5 stages) described later. In the present embodiment, the second lower limit is set to the total capacity of 3 stages. However, the present invention is not limited to this, and the second lower limit may be set to any value that satisfies the above condition (e.g., total capacity of 1 to 4 stages). If the playback control unit 7c determines that the volume of audio information stored in the buffer 8a is neither equal to nor smaller than the second lower limit (3 stages) (SB10, No), the playback control unit 7c determines that there isn't a very strong possibility that buffer underflow will occur, and the routine proceeds to SB15. If the playback control unit 7c determines that the volume of audio information stored in the buffer 8a is equal to or smaller than the second lower limit (3 stages) (SB10, Yes), the playback control unit 7c determines that there is a very strong possibility that buffer underflow will occur, and the routine proceeds to SB 11 of FIG. 5.

In SB 11, the playback control unit 7c determines if a predetermined time (1 second) has elapsed since the start of measurement of time. Specifically, the on-board device 1 includes time measurement means, not shown, such as a timer. In SB11, the playback control unit 7c first starts measuring time with this time measurement means and waits until the predetermined time (1 second) has elapsed (SB11, No). If the predetermined time (1 second) has elapsed (SB11, Yes), the routine proceeds to SB12.

Thereafter, in SB12, the audio information correction unit 7e copies an audio part having the length of the reference time (10 milliseconds) in the audio information stored in the buffer 8a. The "length of reference time" may be set to any very short time that is short enough for the user not to feel strange when listening to the audio information. Although the length of the reference time is 10 milliseconds in the present embodiment, the present invention is not limited to this. The audio part to be copied may be any part of the stored audio information. In the present embodiment, the beginning part of the audio information is copied. However, for example, the end part of the audio information or an intermediate part of the audio information may be copied.

Subsequently, in SB13, the audio information correction unit 7e adds a copy of the audio part before or after the copied audio part and stores the resultant audio information. The place to which the copy of the audio part is added is not limited to before or after the audio part and may be other places. However, in order to prevent degradation in sound quality, it is preferable that the copy of the audio part be added before or after the audio part, because similar sound is repeated.

Thereafter, in SB14, the playback control unit 7c refers to the buffer 8a and determines if the volume of audio information stored in the buffer 8a has been increased to the target volume (total capacity of 10 stages). If the playback control unit 7c determines that the volume of audio information stored in the buffer 8a has not been increased to the target volume (total capacity of 10 stages) (SB14, No), namely if the playback control unit 7c determines that the volume of audio information stored in the buffer 8a is smaller than the target volume (total capacity of 10 stages), the playback control unit 7c determines that there still is a very strong possibility that buffer underflow will occur, and the routine returns to SB11. Subsequently, SB11 to SB14 are similarly repeated. An audio part having the length of the reference time (10 milliseconds) can thus be added at intervals of the predetermined time (1 second) until the volume of audio information stored in the buffer 8a reaches the target volume (total capacity of 10 stages). This can avoid the very strong possibility that buffer underflow will occur. If the playback control unit 7c determines that the volume of audio information stored in the buffer 8a has been increased to the target volume (total capacity of 10 stages) (SB14, Yes), the playback control unit 7c determines that the very strong possibility that buffer underflow will occur has been able to be avoided by adding an audio part in SB13. The routine thus returns to FIG. 3, and the playback control unit 7c terminates the playback control processing. Addition is thus automatically ended when the volume of audio information stored in the buffer 8a reaches the target volume (total capacity of 10 stages). This can prevent unnecessary addition.

In SB15 of FIG. 3, the playback control unit 7c refers to the buffer 8a and determines if the volume of audio information stored in the buffer 8a is equal to or smaller than the first lower limit (total capacity of 5 stages). The first lower limit is a value that is used as an index for determining that there is a fairly strong possibility that buffer underflow will occur, and is a value that is set so as to satisfy the condition that the first lower limit is smaller than the target volume (total capacity of 10 stages). In the present embodiment, the first lower limit is set to the total capacity of 5 stages. However, the present invention is not limited to this, and the first lower limit may be set to any value that satisfies the above condition (e.g., total capacity of 9 to 4 stages). If the playback control unit 7c determines that the volume of audio information stored in the buffer 8a is neither equal to nor smaller than the first lower limit (total capacity of 5 stages) (SB15, No), the playback control unit 7c determines that there isn't a fairly strong possibility that buffer underflow will occur, and terminates the playback control processing. If the playback control unit 7c determines that the volume of audio information stored in the buffer 8a is equal to or smaller than the first lower limit (total capacity of 5 stages) (SB15, Yes), the playback control unit 7c determines that there is a fairly strong possibility that buffer underflow will occur, and the routine proceeds to SB16 of FIG. 5.

In SB16, the silent part determination unit 7d refers to the buffer 8a and determines if a silent part having the length of the reference time (10 milliseconds) is present in the audio information stored in the buffer 8a. If the silent part determination unit 7d determines that a silent part is present (SB16, Yes), the routine proceeds to SB17. If the silent part determination unit 7d determines that no silent part is present (SB16, No), the routine proceeds to SB18.

In SB17, the audio information correction unit 7e adds an additional silent part having the length of the reference time before or after the silent part having the length of the reference time (10 milliseconds) and being stored in the buffer 8a. Since the place to which a silent part is added is thus limited to before or after the silent part contained in the audio information, the possibility that buffer underflow will occur can be reduced while restraining degradation in sound quality. That is, since a silent part is added, a part of audio information is undesirably extended anyway. However, as compared to the case where a silent part is added before or after an audio part with sound, degradation in sound quality due to noise such as "popping" sound can be restrained, and such extension of a part of audio information can be made less likely to be perceived.

Subsequently, in SB18, the playback control unit 7c refers to the buffer 8a and determines if the volume of audio information stored in the buffer 8a is equal to or smaller than the second lower limit (total capacity of 3 stages). If the playback control unit 7c determines that the volume of audio information stored in the buffer 8a is equal to or smaller than the second lower limit (total capacity of 3 stages) (SB18, Yes), the playback control unit 7c determines that there is a very strong possibility that buffer underflow will occur, and the routine proceeds to SB11. If the volume of audio information has reached the total capacity of 5 stages but no silent part is present in the audio information, the volume of audio information cannot be increased by the processing of SB16 and SB17, and the audio information may become equal to or smaller than the second lower limit (total capacity of 3 stages). In such a case, the routine proceeds to the processing (the processing of SB11 to SB14) that is performed when there is a very strong possibility that buffer underflow will occur. An audio part is thus added regardless of whether a silent part is present or not, whereby buffer underflow can be prevented. If the playback control unit 7c determines that the volume of audio information stored in the buffer 8a is neither equal to nor smaller than the second lower limit (total capacity of 3 stages) (SB18, No), the playback control unit 7c determines that there isn't a very strong possibility that buffer underflow will occur, and the routine proceeds to SB19.

Subsequently, in SB19, the playback control unit 7c refers to the buffer 8a and determines if the volume of audio information stored in the buffer 8a has been increased to the target volume (total capacity of 10 stages). If the playback control unit 7c determines that the volume of audio information stored in the buffer 8a has not been increased to the target volume (total capacity of 10 stages) (SB19, No), namely if the playback control unit 7c determines that the volume of audio information stored in the buffer 8a is larger than the second lower limit (total capacity of 3 stages) but is smaller than the target volume (total capacity of 10 stages), the playback control unit 7c determines that there still is a fairly strong possibility that buffer underflow will occur, and the routine returns to SB16. Subsequently, SB16 to SB19 are similarly repeated. Silent parts can thus be added until the volume of audio information stored in the buffer 8a reaches the target volume (total capacity of 10 stages). This can avoid the fairly strong possibility that buffer underflow will occur. If silent parts continue to be added to the same place, the silent parts may be significantly extended. It is therefore more preferable that a silent part not be added before or after the place to which a silent part has been added before. If the playback control unit 7c determines that the volume of audio information stored in the buffer 8a has been increased to the target volume (total capacity of 10 stages) (SB19, Yes), the playback control unit 7c determines that the very strong possibility that buffer underflow will occur has been able to be avoided by adding an audio part in SB17. The routine thus returns to FIG. 3, and the playback control unit 7c terminates the playback control processing.

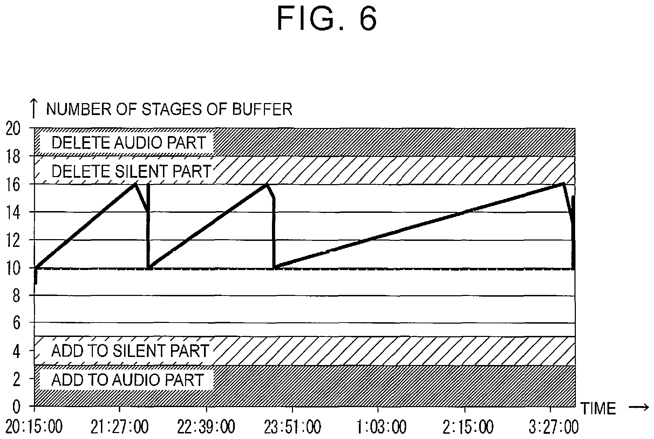

An example of how the volume of audio information stored in the buffer 8a changes when such playback processing and playback control processing are performed will be described below. FIG. 6 is a graph showing change in volume of audio information stored in the buffer 8a. In FIG. 6, the abscissa represents time, and the ordinate represents the volume of audio information stored in the buffer 8a, which is shown in the number of stages of the buffer 8a. As shown in FIG. 6, even when the rate at which the audio information is played back and discarded from the buffer 8a does not keep up with the rate at which the audio information is stored in the buffer 8a, silent parts are deleted until the volume of audio information is reduced to the target volume (total capacity of 10 stages), if the volume of audio information becomes equal to or larger than the first upper limit (total capacity of 16 stages). The state farthest from buffer overflow and buffer underflow can thus be maintained. Although not shown in the figure, even when the volume of audio information becomes equal to or larger than the second upper limit (total capacity of 18 stages), becomes equal to or smaller than the first lower limit (total capacity of 5 stages), and becomes equal to or smaller than the second lower limit (total capacity of 3 stages), deletion or addition of a silent or audio part is similarly performed to correct the audio information so that the volume of audio information becomes closer to the target volume (total capacity of 10 stages). This concludes description of the playback control processing.

### [Modifications of Embodiment]

Although the embodiment according to the present invention is described above, the specific configuration and means of the present invention can be modified and improved as desired within the technical scope of the present invention described in the claims. Such modifications will be described below.

### (Regarding Problems to be Solved and Effects of the Invention)

First, the problems to be solved by the invention and the effects of the invention are not limited to those described above, and may vary depending on the environment in which the invention is carried out and the details of the configurations.

### (Regarding Distribution and Integration)

The above electrical components are functionally conceptual and need not necessarily be physically configured as shown in the figures. Namely, a specific form of distribution and integration of the components is not limited to that shown in the figures, and all or a part of the components may be functionally or physically distributed or integrated in a desired unit, according to the various loads, the condition of use, etc. For example, the data recording unit 8 may be distributed over a plurality of recording devices.

### (Regarding Shapes, Numerical Values, Structures, and Chronological Order).

Regarding the components illustrated in the embodiment and drawings, the shapes, the numerical values, or the relationships in structure or chronological order between or among a plurality of components can be modified and improved as desired within the technical scope of the present invention.

### (Regarding Target Volume)

In the present embodiment, the target volume serving as the condition for starting the playback control processing in the decoding processing shown in FIG. 2 and the target volume that is used when deleting or adding audio information in the playback control processing shown in FIGS. 3, 4, and 5 are the same (total capacity of 10 stages). However, these target volumes may be different from each other.

### (Regarding Predetermined Time)

In the present embodiment, the predetermined time in SB2 of FIG. 4 and the predetermined time in SB11 of FIG. 5 are the same (1 second). However, these predetermined times may be different from each other.

### (Regarding Reference Time)

In the present embodiment, the reference time in SB3 of FIG. 4, the reference time in SB7 of FIG. 4, the reference time in SB12 of FIG. 5, and the reference time in SB17 of FIG. 5 are the same (10 milliseconds). However, these reference times may be different from each other.

### (Regarding Playback Control Processing)

In the present embodiment, in the playback control processing shown in FIGS. 3 and 4, if the volume of audio information stored in the buffer 8a becomes equal to or larger than the total capacity of 18 stages (SB1, Yes), the processing of SB2, SB3, SB4 is repeated until the volume of audio information stored in the buffer 8a is reduced to the target volume (10 stages) (SB4, Yes). However, the present invention is not limited to this. Specifically, repetition of the processing of SB2, SB3, SB4 may be stopped before the volume of audio information stored in the buffer 8a is reduced to the target volume (10 stages). For example, if the volume of audio information stored in the buffer 8a becomes equal to a value between the first upper limit and the second upper limit, it may be determined that the very strong possibility that buffer overflow will occur has been able to be avoided but there still is a fairly strong possibility that buffer overflow will occur, and the routine may proceed to SB6.

In the present embodiment, in the playback control processing shown in FIGS. 3 and 5, if the volume of audio information stored in the buffer 8a becomes equal to or smaller than the total capacity of 3 stages (SB10, Yes), the processing of SB11, SB12, SB13, SB14 is repeated until the volume of audio information stored in the buffer 8a is increased to the target volume (10 stages) (SB14, Yes). However, the present invention is not limited to this. Specifically, repetition of the processing of SB11, SB12, SB13, SB14 may be stopped before the volume of audio information stored in the buffer 8a is increased to the target volume (10 stages). For example, if the volume of audio information stored in the buffer 8a becomes equal to a value between the first lower limit and the second lower limit, it may be determined that the very strong possibility that buffer underflow will occur has been able to be avoided but there still is a fairly strong possibility that buffer underflow will occur, and the routine may proceed to SB16.

### (Regarding Communication)

In the present embodiment, the mobile terminal 10 including the encoding unit 14a and the on-board device 1 including the decoding unit 7a communicate with each other. However, the present invention is not limited to this. For example, the audio information correction system is applicable to various devices for communication of audio information. For example, the audio information correction system is also applicable to communication that does not involve encoding and decoding to transmit and receive audio information.

### Description of the Reference Numerals

- 1: On-Board Device
- 2: Speaker
- 3: Touch Panel
- 4: Display
- 5: Current Location Obtaining Unit
- 6: Communication Unit
- 7: Control Unit
- 7a: Decoding Unit
- 7b: Audio Playback Unit
- 7c: Playback Control Unit
- 7d: Silent Part Determination Unit
- 7e: Audio Information Correction Unit
- 8: Data Recording Unit
- 8a: Buffer
- 10: Mobile Terminal
- 11: Touch Panel
- 12: Display
- 13: Communication Unit
- 14: Control Unit
- 14a: Encoding Unit
- 15: Data Recording Unit
- 15a: Audio DB

## Claims

1. An audio information correction system, comprising:
storage means (8) for storing continuous audio information received by communication means (6);
time measurement means configured to measure time;
silent part determination means (7d) for determining if a silent part that lasts for a length of a reference time is present in the audio information stored in the storage means (15); and
audio information correction means (7e) for correcting the audio information by deleting the silent part from the storage means (8) or by adding another silent part continuously before or after the silent part, and storing the resultant audio information in the storage means (8), if the silent part determination means (7d) determines that the silent part is present, wherein
the audio information correction means (7e) deletes the silent part from the storage means (8) when a volume of the audio information stored in the storage means (8) becomes equal to or larger than a first upper limit that is larger than a target volume, and the audio information correction means (7e) adds another silent part continuously before or after the silent part and stores the resultant audio information in the storage means (8) when the volume of the audio information stored in the storage means (8) becomes equal to or smaller than a first lower limit that is smaller than the target volume and, wherein
the audio information correction means (7e) deletes an audio part having a predetermined length in the audio information from the storage means (8) at a predetermined time interval as measured by the time measurement means, when the volume of the audio information stored in the storage means (8) becomes equal to or larger than a second upper limit that is larger than the first upper limit, and the audio information correction means (7e) adds an audio part having a predetermined length in the audio information at a predetermined time interval as measured by the time measurement means, and stores the resultant audio information in the storage means (8) when the volume of the audio information stored in the storage means (8) becomes equal to or smaller than a second lower limit that is smaller than the first lower limit.

2. The audio information correction system according to claim 1, wherein
the audio information correction means (7e) stops deleting or adding the silent part or stops deleting or adding the audio part when the volume of the audio information stored in the storage means (8) becomes equal to the target volume.

3. The audio information correction system according to any one of claims 1-2, wherein
the target volume is equal to half the overall capacity of the storage means (8).

4. The audio information correction system according to any one of claims 1 to 3, further comprising:
playback means (7b) for starting playback of the audio information stored in the storage means (8) when the audio information corresponding to half the overall capacity of the storage means (8) has been stored.

5. The audio information correction system according to any one of claims 1 to 4, further comprising:
communication means (6) for receiving, via communication, the continuous audio information transmitted after being encoded by encoding means (14a) in the transmission means (10); and
decoding means (7a) for decoding the audio information received by the communication means (6).

6. An audio information correction method, comprising:
a silent part determination step of determining if a silent part that lasts for a length of a reference time is present in audio information stored in storage means (8) for storing continuous audio information received by communication means (6); and
an audio information correction step of correcting the audio information by deleting the silent part from the storage means (8) or by adding another silent part continuously before or after the silent part, and storing the resultant audio information in the storage means (8), if it is determined in the silent part determination step that the silent part is present, wherein the deleting is performed when a volume of the audio information stored in the storage means (8) becomes equal to or larger than a first upper limit that is larger than a target volume, and adding another silent part continuously before or after the silent part when the volume of the audio information stored in the storage means (8) becomes equal to or smaller than a first lower limit that is smaller than the target volume, and wherein deletion of an audio part having a predetermined length in the audio information from the storage means (8) is performed at a predetermined time interval when the volume of the audio information stored in the storage means (8) becomes equal to or larger than a second upper limit that is larger than the first upper limit, and adding an audio part having a predetermined length in the audio information is performed at a predetermined time interval, when the volume of the audio information stored in the storage means (8) becomes equal to or smaller than a second lower limit that is smaller than the first lower limit.

## Patentansprüche

1. Audioinformationskorrektursystem, umfassend:
ein Speichermittel (8) zum Speichern kontinuierlicher Audioinformationen, die durch Kommunikationsmittel (6) empfangen werden,
ein Zeitmessmittel, das dazu ausgestaltet ist, die Zeit zu messen,
ein Mittel (7d) zur Bestimmung eines geräuschlosen Teils zum Bestimmen, ob ein geräuschloser Teil, der für eine Länge einer Referenzzeit andauert, in den Audioinformationen vorhanden ist, die in dem Speichermittel (15) gespeichert sind, und
ein Audioinformationskorrekturmittel (7e) zum Korrigieren der Audioinformationen durch Löschen des geräuschlosen Teils aus dem Speichermittel (8) oder durch Hinzufügen eines anderen geräuschlosen Teils kontinuierlich vor oder nach dem geräuschlosen Teil und Speichern der resultierenden Audioinformationen in dem Speichermittel (8), wenn das Mittel (7d) zur Bestimmung eines geräuschlosen Teils bestimmt, dass der geräuschlose Teil vorhanden ist, wobei das Audioinformationskorrekturmittel (7e) den geräuschlosen Teil aus dem Speichermittel (8) löscht, wenn eine Menge der Audioinformationen, die in dem Speichermittel (8) gespeichert sind, gleich oder größer als eine erste Obergrenze wird, die größer als eine Zielmenge ist, und das Audioinformationskorrekturmittel (7e) einen anderen geräuschlosen Teil kontinuierlich vor oder nach dem geräuschlosen Teil hinzufügt und die resultierenden Audioinformationen in dem Speichermittel (8) speichert, wenn die Menge der Audioinformationen, die in dem Speichermittel (8) gespeichert sind, gleich oder kleiner als eine erste Untergrenze wird, die kleiner als die Zielmenge ist, und wobei
das Audioinformationskorrekturmittel (7e) einen Audioteil mit einer vorbestimmten Länge in den Audioinformationen aus dem Speichermittel (8) bei einem vorbestimmten Zeitintervall, wie durch das Zeitmessmittel gemessen, löscht, wenn die Menge der Audioinformationen, die in dem Speichermittel (8) gespeichert sind, gleich oder größer als eine zweite Obergrenze wird, die größer als die erste Obergrenze ist, und das Audioinformationskorrekturmittel (7e) einen Audioteil mit einer vorbestimmten Länge in den Audioinformationen bei einem vorbestimmten Zeitintervall, wie durch das Zeitmessmittel gemessen, hinzufügt und die resultierenden Audioinformationen in dem Speichermittel (8) speichert, wenn die Menge der Audioinformationen, die in dem Speichermittel (8) gespeichert sind, gleich oder kleiner als eine zweite Untergrenze wird, die kleiner als die erste Untergrenze ist.

2. Audioinformationskorrektursystem nach Anspruch 1, wobei das Audioinformationskorrekturmittel (7e) das Löschen oder Hinzufügen des geräuschlosen Teils stoppt oder das Löschen oder Hinzufügen des Audioteils stoppt, wenn die Menge der Audioinformationen, die in dem Speichermittel (8) gespeichert sind, der Zielmenge gleich wird.

3. Audioinformationskorrektursystem nach einem der Ansprüche 1-2, wobei die Zielmenge der Hälfte der Gesamtkapazität des Speichermittels (8) gleicht.

4. Audioinformationskorrektursystem nach einem der Ansprüche 1 bis 3, ferner umfassend:
ein Wiedergabemittel (7b) zum Starten der Wiedergabe der Audioinformationen, die in dem Speichermittel (8) gespeichert sind, wenn die Audioinformationen, die der Hälfte der Gesamtkapazität des Speichermittels (8) entsprechen, gespeichert worden sind.

5. Audioinformationskorrektursystem nach einem der Ansprüche 1 bis 4, ferner umfassend:
ein Kommunikationsmittel (6) zum Empfangen, über Kommunikation, der kontinuierlichen Audioinformationen, die nach Codieren durch ein Codiermittel (14a) in dem Übertragungsmittel (10) übertragen werden, und
ein Decodiermittel (7a) zum Decodieren der Audioinformationen, die durch das Kommunikationsmittel (6) empfangen werden.

6. Audioinformationskorrekturverfahren, umfassend:
einen Schritt der Bestimmung eines geräuschlosen Teils zum Bestimmen, ob ein geräuschloser Teil, der für eine Länge einer Referenzzeit andauert, in Audioinformationen vorhanden ist, die in einem Speichermittel (8) zum Speichern kontinuierlicher Audioinformationen gespeichert sind, die durch ein Kommunikationsmittel (6) empfangen werden, und
einen Audioinformationskorrekturschritt zum Korrigieren der Audioinformationen durch Löschen des geräuschlosen Teils aus dem Speichermittel (8) oder durch Hinzufügen eines anderen geräuschlosen Teils kontinuierlich vor oder nach dem geräuschlosen Teil und Speichern der resultierenden Audioinformationen in dem Speichermittel (8), wenn in dem Schritt der Bestimmung eines geräuschlosen Teils bestimmt wird, dass der geräuschlose Teil vorhanden ist, wobei das Löschen durchgeführt wird, wenn eine Menge der Audioinformationen, die in dem Speichermittel (8) gespeichert sind, gleich oder größer als eine erste Obergrenze wird, die größer als eine Zielmenge ist, und Hinzufügen eines anderen geräuschlosen Teils kontinuierlich vor oder nach dem geräuschlosen Teil durchgeführt wird, wenn die Menge der Audioinformationen, die in dem Speichermittel (8) gespeichert sind, gleich oder kleiner als eine erste Untergrenze wird, die kleiner als die Zielmenge ist, und wobei Löschen eines Audioteils mit einer vorbestimmten Länge in den Audioinformationen aus dem Speichermittel (8) bei einem vorbestimmten Zeitintervall durchgeführt wird, wenn die Menge der Audioinformationen, die in dem Speichermittel (8) gespeichert sind, gleich oder größer als eine zweite Obergrenze wird, die größer als die erste Obergrenze ist, und Hinzufügen eines Audioteils mit einer vorbestimmten Länge in den Audioinformationen bei einem vorbestimmten Zeitintervall durchgeführt wird, wenn die Menge der Audioinformationen, die in dem Speichermittel (8) gespeichert sind, gleich oder kleiner als eine zweite Untergrenze wird, die kleiner als die erste Untergrenze ist.

## Revendications

1. Système de correction d'informations audio, comprenant :
des moyens de mémorisation (8) pour mémoriser des informations audio continues reçues par des moyens de communication (6) ;
des moyens de mesure de temps configurés pour mesurer le temps ;
des moyens de détermination de partie de silence (7d) pour déterminer si une partie de silence qui dure pendant une durée d'un temps de référence est présente dans les informations audio mémorisées dans les moyens de mémorisation (15) ; et
des moyens de correction d'informations audio (7e) pour corriger les informations audio en effaçant la partie de silence des moyens de mémorisation (8) ou en ajoutant une autre partie de silence continûment avant ou après la partie de silence, et mémoriser les informations audio résultantes dans les moyens de mémorisation (8), si les moyens de détermination de partie de silence (7d) déterminent que la partie de silence est présente, dans lequel
les moyens de correction d'informations audio (7e) effacent la partie de silence des moyens de mémorisation (8) lorsqu'un volume des informations audio mémorisées dans les moyens de mémorisation (8) devient supérieur ou égal à une première limite supérieure qui est supérieure à un volume cible, et les moyens de correction d'informations audio (7e) ajoutent une autre partie de silence continûment avant ou après la partie de silence et mémorisent les informations audio résultantes dans les moyens de mémorisation (8) lorsque le volume des informations audio mémorisées dans les moyens de mémorisation (8) devient inférieur ou égal à une première limite inférieure qui est inférieure au volume cible et, dans lequel
les moyens de correction d'informations audio (7e) effacent une partie audio ayant une longueur prédéterminée dans les informations audio des moyens de mémorisation (8) à un intervalle de temps prédéterminé tel que mesuré par les moyens de mesure de temps, lorsque le volume des informations audio mémorisées dans les moyens de mémorisation (8) devient supérieur ou égal à une deuxième limite supérieure qui est supérieure à la première limite supérieure, et les moyens de correction d'informations audio (7e) ajoutent une partie audio ayant une longueur prédéterminée dans les informations audio à un intervalle de temps prédéterminé tel que mesuré par les moyens de mesure de temps, et mémorisent les informations audio résultantes dans les moyens de mémorisation (8) lorsque le volume des informations audio mémorisées dans les moyens de mémorisation (8) devient inférieur ou égal à une deuxième limite inférieure qui est inférieure à la première limite inférieure.

2. Système de correction d'informations audio selon la revendication 1, dans lequel
les moyens de correction d'informations audio (7e) arrêtent l'effacement ou l'ajout de la partie de silence ou arrêtent l'effacement ou l'ajout de la partie audio lorsque le volume des informations audio mémorisées dans les moyens de mémorisation (8) devient égal au volume cible.

3. Système de correction d'informations audio selon l'une quelconque des revendications 1 à 2, dans lequel
le volume cible égal à la moitié de la capacité globale des moyens de mémorisation (8).

4. Système de correction d'informations audio selon l'une quelconque des revendications 1 à 3, comprenant en outre :
des moyens de reproduction (7b) pour débuter la reproduction des informations audio mémorisées dans les moyens de mémorisation (8) lorsque les informations audio correspondant à la moitié de la capacité globale des moyens de mémorisation (8) ont été mémorisées.

5. Système de correction d'informations audio selon l'une quelconque des revendications 1 à 4, comprenant en outre :
des moyens de communication (6) pour recevoir, par une communication, les informations audio continues transmises après avoir été encodées par des moyens d'encodage (14a) dans les moyens de transmission (10) ; et
des moyens de décodage (7a) pour décoder les informations audio reçues par les moyens de communication (6).

6. Procédé de correction d'informations audio, comprenant :
une étape de détermination de partie de silence pour déterminer si une partie de silence qui dure pendant une durée d'un temps de référence est présente dans les informations audio mémorisées dans les moyens de mémorisation (8) pour mémoriser les informations audio continues reçues par les moyens de communication (6) ; et
une étape de correction d'informations audio pour corriger les informations audio en effaçant la partie de silence des moyens de mémorisation (8) ou en ajoutant une autre partie de silence continûment avant ou après la partie de silence, et pour mémoriser les informations audio résultantes dans les moyens de mémorisation (8), s'il est déterminé, à l'étape de détermination de partie de silence, que la partie de silence est présente, dans lequel l'effacement est effectué lorsqu'un volume des informations audio mémorisées dans les moyens de mémorisation (8) devient supérieur ou égal à une première limite supérieure qui est supérieure à un volume cible, et l'ajout d'une autre partie de silence continûment avant ou après la partie de silence est effectué lorsque le volume des informations audio mémorisées dans les moyens de mémorisation (8) devient inférieur ou égal à une première limite inférieure qui est inférieure au volume cible, et dans lequel l'effacement d'une partie audio ayant une longueur prédéterminée dans les informations audio des moyens de mémorisation (8) est effectué à un intervalle de temps prédéterminé lorsque le volume des informations audio mémorisées dans les moyens de mémorisation (8) devient supérieur ou égal à une deuxième limite supérieure qui est supérieure à la première limite supérieure, et l'ajout d'une partie audio ayant une longueur prédéterminée dans les informations audio est effectué à un intervalle de temps prédéterminé, lorsque le volume des informations audio mémorisées dans les moyens de mémorisation (8) devient inférieur ou égal à une deuxième limite inférieure qui est inférieure à la première limite inférieure.
